(19) Europäisches Patentamt European Patent Office Office européen des brevets

(11) **EP 4 779 476 A1**

(12) **EUROPEAN PATENT APPLICATION**
published in accordance with Art. 153(4) EPC

(43) Date of publication:
**22.07.2026  Bulletin 2026/30**

(21) Application number: **24870049.4**

(22) Date of filing: **24.07.2024**

(51) International Patent Classification (IPC):
***G06F 11/07*** *(2006.01)*

(52) Cooperative Patent Classification (CPC):
**G06F 11/07**

(86) International application number:
**PCT/CN2024/107351**

(87) International publication number:
**WO 2025/066495 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023  CN 202311286869**

(71) Applicant: **HUAWEI TECHNOLOGIES CO., LTD.
Shenzhen 518129 (CN)**

(72) Inventors:
• **WAN, Jun
  Shenzhen, Guangdong 518129 (CN)**

• **ZHANG, Wengui
  Shenzhen, Guangdong 518129 (CN)**
• **YAN, Peng
  Shenzhen, Guangdong 518129 (CN)**
• **CHEN, Xianzhi
  Shenzhen, Guangdong 518129 (CN)**
• **QIU, Nana
  Shenzhen, Guangdong 518129 (CN)**
• **DONG, Weiwei
  Shenzhen, Guangdong 518129 (CN)**

(74) Representative: **Gill Jennings & Every LLP
The Broadgate Tower
20 Primrose Street
London EC2A 2ES (GB)**

(54) **METHOD AND APPARATUS FOR PREDICTING MEMORY FAULT, AND CHIP, DEVICE AND STORAGE MEDIUM**

(57)    A memory fault prediction method and apparatus, a chip, a device, and a storage medium are disclosed, and belong to the field of computer technologies. The method includes: obtaining an error location distribution of an error correction unit associated with a memory, where the memory includes at least one memory device, the error correction unit includes a plurality of data bits obtained from a plurality of memory cells of the memory through a plurality of consecutive times of burst read, each data bit corresponds to one memory cell in the memory, the error location distribution indicates a location of an error data bit in the plurality of data bits, and the error location distribution causes CE occurrence in the memory; obtaining a memory fault model, where the memory fault model includes at least one reference location distribution, and the reference location distribution is associated with a UCE of the memory; and outputting a prediction result based on a similarity between the error location distribution and the at least one reference location distribution, where the prediction result indicates a probability of UCE occurrence in the memory.

This method helps improve timeliness of memory fault prediction.

FIG. 2

**Description**

This application claims priority to Chinese Patent Application No. 202311286869.2, filed on September 28, 2023 and entitled "MEMORY FAULT PREDICTION METHOD AND APPARATUS, CHIP, DEVICE, AND STORAGE MEDIUM", which is incorporated herein by reference in its entirety.

**TECHNICAL FIELD**

This application relates to the field of computer technologies, and in particular, to a memory fault prediction method and apparatus, a chip, a device, and a storage medium.

**BACKGROUND**

With development of Internet technologies, a memory capacity of a server is increasing. A memory fault is one of main causes of server faults. To ensure that servers run properly, memory fault prediction needs to be performed before the fault occurs in a memory.

In a related technology, the following method may be used for memory fault prediction: determining memory fault features of a to-be-predicted device at a plurality of memory granularities based on a plurality of pieces of correctable error (CE) information in a memory of the to-be-predicted device within a specified time period, where the memory granularities include an entire system memory granularity, a memory module granularity, a physical array granularity, and a memory device granularity; and predicting a probability of uncorrectable error (UCE) occurrence in the to-be-predicted device based on resource static information of the to-be-predicted device and the memory fault features at the various memory granularities.

In this method, the plurality of pieces of CE information in the specified time period need to be collected first, and a collection process of the CE information is long. Consequently, timeliness of the memory fault prediction method is poor.

**SUMMARY**

This application provides a memory fault prediction method and apparatus, a chip, a device, and a storage medium, to help improve timeliness of memory fault prediction.

According to a first aspect, this application provides a memory fault prediction method. The method includes: obtaining an error location distribution of an error correction unit associated with a memory, where the memory includes at least one memory device, each memory device includes a plurality of memory cells arranged in an array, the error correction unit includes a plurality of data bits obtained from the plurality of memory cells of the at least one memory device through a plurality of consecutive times of burst read, each of the plurality of data bits corresponds to one memory cell in the plurality of memory cells of the at least one memory device, that is, each data bit corresponds to one memory cell and different data bits correspond to different memory cells, the error location distribution indicates a location of an error data bit in the plurality of data bits, and the error location distribution causes correctable error CE occurrence in the memory; obtaining a memory fault model, where the memory fault model includes at least one reference location distribution, and the reference location distribution is associated with an uncorrectable error UCE of the memory; and outputting a prediction result based on a similarity between the error location distribution and the at least one reference location distribution, where the prediction result indicates a probability of UCE occurrence in the memory.

In this application, because the reference location distribution is associated with the UCE, a similarity between the error location distribution when the CE occurs in the memory and the at least one reference location distribution is associated with the probability of UCE occurrence in the memory, and may reflect a magnitude of the probability of UCE occurrence in the memory. A higher similarity between the error location distribution and the reference location distribution indicates a higher probability of UCE occurrence in the memory. On the contrary, a lower similarity between the error location distribution of the error correction unit and the reference location distribution indicates a lower probability of UCE occurrence in the memory. Therefore, the probability of UCE occurrence in the memory may be predicted based on the similarity between the error location distribution when the CE occurs in the memory and the at least one reference location distribution. When the CE occurs in the memory, a memory fault may be predicted based on the error location distribution of the error correction unit corresponding to the CE, without waiting for collecting a large amount of CE information. Therefore, timeliness of memory fault prediction is high. In addition, memory fault prediction is performed based on the error location distribution of the error correction unit, that is, based on a UCE generation mechanism. This helps improve accuracy of the memory fault prediction. The prediction method may be used in combination with another fault prediction method in the related technology, to further improve the accuracy of the memory fault prediction.

Optionally, that the reference location distribution is associated with the UCE of the memory means that: The reference location distribution is an error location distribution in a case in which the UCE occurs in the memory, or the reference location distribution is an error location distribution corresponding to a CE that occurs within specified duration before the UCE occurs in the memory. If a CE occurs within the specified duration before the UCE occurs in the memory, it indicates that the CE may evolve into a UCE subsequently. Therefore, an error location distribution corresponding to the CE may be used as a reference location distribution.

Optionally, either of the following two manners may be used for outputting the prediction result based on the similarity between the error location distribution and the at least one reference location distribution.

In a first manner, a similarity between the error location distribution and each reference location distribution is separately calculated; and the prediction result is output based on the calculated similarity. For example, a highest similarity in calculated similarities may be first determined, and then the prediction result is output based on the highest similarity. For another example, for each calculated similarity, a probability of UCE occurrence that corresponds to each reference location distribution may be determined, then, fusion processing is performed on determined probabilities to obtain a fusion result, and finally the prediction result is output based on the fusion result.

In the first manner, the error location distribution is compared with each reference location distribution, to obtain the similarity between the error location distribution and each reference location distribution. This helps improve accuracy of a fault prediction result.

In a second manner, a similarity between the error location distribution and each reference location distribution in the memory fault model is calculated sequentially; and when the calculated similarity is higher than a similarity threshold, similarity calculation is stopped, and the prediction result is output based on the similarity higher than the similarity threshold.

In the second manner, the prediction result may be obtained without calculating similarities corresponding to all reference location distributions. This helps improve efficiency of the fault prediction.

Optionally, the error location distribution of the error correction unit is represented by a plurality of first elements, the plurality of first elements are in one-to-one correspondence with the plurality of data bits, and each first element indicates whether one corresponding data bit is an error data bit. The reference location distribution is represented by a plurality of second elements, and the plurality of first elements are in one-to-one correspondence with the plurality of second elements. Calculating a similarity between the error location distribution and any reference location distribution in the memory fault model includes: collecting statistics on a quantity of first elements that are in the error location distribution and that are different from the corresponding second elements, to obtain the similarity; or collecting statistics on a quantity of first elements that are in the error location distribution and that are the same as the corresponding second elements, to obtain the similarity.

Optionally, a manner of calculating a similarity between the error location distribution and one reference location distribution may be either of the following two manners.

In a first manner, the error location distribution is represented by a first binary sequence, the first binary sequence includes a plurality of first data bits, and each first data bit is one first element. The reference location distribution is represented by a second binary sequence, the second binary sequence includes a plurality of second data bits, and each second data bit is one second element. A Hamming distance between the first binary sequence and the second binary sequence is used as the similarity between the error location distribution and the reference location distribution.

The first manner is used for calculating the similarity, so that a calculation manner is simple. This helps simplify a process of the memory fault prediction and improve the efficiency of the memory fault prediction.

In a second manner, the error location distribution is represented by a first graph, the first graph includes a plurality of first units arranged in an array, the plurality of first units are in one-to-one correspondence with the plurality of data bits, and each first unit indicates whether one corresponding data bit is an error data bit. The reference location distribution is represented by a second graph, the second graph includes a plurality of second units arranged in an array, and the plurality of second units are in one-to-one correspondence with the plurality of first units. An overlapping degree between the first graph and the second graph is determined, and the overlapping degree is used as a similarity between the error location distribution and the reference location distribution. The overlapping degree is in direct proportion to a quantity of first faulty units that are in the first graph and that have same locations as second faulty units in the second graph, the first faulty unit is a first unit indicating that a corresponding data bit is an error data bit, and the second faulty unit is a second unit indicating that a corresponding data bit is an error data bit.

The first graph and the second graph are used for representing the error location distribution and the reference location distribution respectively, so that a location relationship between data bits in an error correction unit can be conveniently determined. For example, the data bits are in a same burst or a same data queue (DQ).

In the second manner, a manner of calculating the overlapping degree may be classified into two types. A first type is calculating the overlapping degree based on the quantity of first faulty units that are in the first graph and that have the same locations as the second faulty units in the second graph. A second type is calculating the overlapping degree based on the quantity of first faulty units that are in the first graph and that have the same locations as the second faulty units in the second graph and a quantity of first non-faulty units that are in the first graph and that have same locations as second non-faulty units.

The two types of overlapping degree calculation manners respectively correspond to two different calculation manners. Therefore, there are at least the following four overlapping degree calculation manners.

In a first manner, the overlapping degree is determined based on the quantity of first faulty units that are in the first graph and that have the same locations as the second faulty units in the second graph and a quantity of second faulty units in the second graph.

For example, a ratio of, to the quantity of second faulty units in the second graph, the quantity of first faulty units that are in the first graph and that have the same locations as the second faulty units in the second graph may be determined as the overlapping degree. This has simple calculation logic and is easy to implement.

In a second manner, the overlapping degree is determined based on the quantity of first faulty units that are in the first graph and that have the same locations as the second faulty units in the second graph, relative locations of a first non-faulty unit that is in the first graph and that has a same location as the second faulty unit in the second graph and the first faulty unit in the second graph, and a quantity of second faulty units in the second graph.

For example, the quantity of first faulty units that are in the first graph and that have the same locations as the second faulty units in the second graph is first determined; then, the quantity of first faulty units that are in the first graph and that have the same locations as the second faulty units in the second graph is adjusted based on the relative locations of the first non-faulty unit that is in the first graph and that has the same location as the second faulty unit in the second graph and the first faulty unit in the second graph, to obtain an adjusted quantity; and then, a ratio of the adjusted quantity to the quantity of second faulty units in the second graph is determined as the overlapping degree.

The quantity of first faulty units that are in the first graph and that have the same locations as the second faulty units in the second graph is adjusted based on the relative locations of the first non-faulty unit that is in the first graph and that has the same location as the second faulty unit in the second graph and the first faulty unit in the second graph, so that a finally calculated overlapping degree can better reflect the similarity between the error location distribution and the reference location distribution, and the memory fault prediction result is more accurate.

In a third manner, the overlapping degree is determined based on a quantity of overlapping units in the first graph and the second graph and a quantity of first units in the first graph, where the overlapping units include the first faulty unit that is in the first graph and that has the same location as the second faulty unit in the second graph, and the first non-faulty unit that is in the first graph and that has the same location as the second non-faulty unit.

For example, a ratio of the quantity of overlapping units to a quantity of second faulty units in the second graph may be determined as the overlapping degree.

In a fourth manner, the overlapping degree is determined based on a quantity of overlapping units in the first graph and the second graph, relative locations of a first non-faulty unit that is in the first graph and that has a same location as the second faulty unit in the second graph and the first faulty unit in the second graph, and a quantity of first units in the first graph.

For example, the quantity of overlapping units is first determined; then, the quantity of overlapping units is adjusted based on the relative locations of the first non-faulty unit that is in the first graph and that has the same location as the second faulty unit in the second graph and the first faulty unit in the second graph, to obtain an adjusted quantity; and then, a ratio of the adjusted quantity to a quantity of second faulty units in the second graph is determined as the overlapping degree.

In the second manner and the fourth manner, first, a first non-faulty unit that has a same location as the second faulty unit in the second graph and whose data bit belongs to a same data queue and/or a same burst as a data bit corresponding to the first faulty unit is determined from the first graph; an adjustment value is determined based on the determined first non-faulty unit and a specified value; and a corresponding quantity is adjusted by using the adjustment value. For example, the corresponding quantity is added to the adjustment value, to obtain the adjusted quantity. The specified value indicates an error probability of the determined first non-faulty unit. The adjustment value is equal to a sum of determined specified values corresponding to the first non-faulty unit.

When an error occurs in a data bit corresponding to a first unit, it is highly probable that a data bit in which no error occurs and that is in a same DQ and/or burst as the data bit is to be erroneous. Therefore, once an error occurs in the data bit to be erroneous, the corresponding first unit overlaps the second faulty unit in the second graph. Therefore, a value (that is, the foregoing specified value) may be specified for the first non-faulty memory cell corresponding to this type of data bit, to indicate an error probability, and a quantity of overlapping units is adjusted based on the specified value.

In some examples, the prediction result may be the foregoing similarity. In some other examples, the prediction result may be a risk level, and the risk level indicates a probability of UCE occurrence in the memory. A higher risk level indicates a higher probability of UCE occurrence in the memory. On the contrary, a lower risk level indicates a lower probability of UCE occurrence in the memory.

When the similarity is represented by the Hamming distance, a risk level corresponding to a distance interval to which the Hamming distance belongs may be output based on the distance interval to which the Hamming distance belongs and a correspondence between the distance interval and the risk level. The correspondence includes N distance intervals and N risk levels, and different distance intervals correspond to different risk levels, where N is an integer and N is greater than 1.

A larger Hamming distance indicates a lower similarity between the error location distribution and the reference location distribution, and a lower probability of occurrence of the UCE. On the contrary, a smaller Hamming distance indicates a higher similarity between the error location distribution and the reference location distribution, and a higher probability of the occurrence of the UCE.

When the similarity is represented by the overlapping degree, a risk level corresponding to an overlapping degree interval to which the overlapping degree belongs may be output based on the overlapping degree interval to which the overlapping degree belongs and a correspondence between the overlapping degree interval and the risk level. The correspondence includes M overlapping degree intervals and M risk levels, and different overlapping degree intervals correspond to different risk levels, where M is an integer and M is greater than 1.

A larger overlapping degree indicates a higher similarity between the error location distribution and the reference location distribution, and a higher probability of the occurrence of the UCE. On the contrary, a smaller overlapping degree indicates a lower similarity between the error location distribution and the reference location distribution, and a lower probability of the occurrence of the UCE.

Optionally, a quantity of risk levels may be set based on an actual requirement. For example, the risk levels may be classified into three risk levels: high, medium, and low.

In a second possible implementation, the memory fault model is a neural network model, the neural network model is obtained through training by using a first-type sample and a second-type sample, the first-type sample is an error location distribution of a corresponding error correction unit when the CE occurs in the memory having only CE occurrence, and the second-type sample is an error location distribution of a corresponding error correction unit when a CE occurs in the memory having UCE occurrence before a UCE occurs. The error location distribution is processed by using the neural network model, to obtain the prediction result.

The neural network model is used for predicting the memory fault, and the error location distribution when the UCE occurs in the memory does not need to be obtained in advance. Therefore, an application scope is wide.

In the second possible implementation, the prediction result may be a probability value of the occurrence of the UCE in the memory or a risk level indicating the probability value of the occurrence of the UCE in the memory.

According to a second aspect, this application provides a memory fault prediction apparatus. The memory fault prediction apparatus has a function of implementing the method according to any one of the first aspect or the optional manners of the first aspect. The function may be implemented by hardware, or may be implemented by hardware executing corresponding software. The hardware or the software includes one or more units corresponding to the foregoing functions.

According to a third aspect, an electronic device is provided. The electronic device includes a processor and a storage. The storage is configured to store a software program and a module. The processor runs or executes the software program and/or the module stored in the storage, to implement the method according to any one of the first aspect or the possible implementations of the first aspect.

Optionally, there are one or more processors, and there are one or more storages.

Optionally, the storage may be integrated with the processor, or the storage and the processor are separately disposed.

In a specific implementation process, the storage may be a non-transitory (non-transitory) memory, for example, a read-only memory (read-only memory, ROM). The storage and the processor may be integrated into a same chip, or may be respectively disposed on different chips. A type of the storage and a manner of disposing the storage and the processor are not limited in this application.

According to a fourth aspect, a computer program product is provided. The computer program product includes computer program code. When the computer program code is run by a computer, the computer is caused to perform the method according to any one of the first aspect or the possible implementations of the first aspect.

According to a fifth aspect, this application provides a computer-readable storage medium. The computer-readable storage medium is configured to store program code executed by a processor, and the program code includes instructions used for implementing the method according to any possible implementation of the first aspect.

According to a sixth aspect, this application provides a chip, including a logic circuit and a power supply circuit. The logic circuit is configured to perform the method according to any possible implementation of the first aspect, and the power supply circuit is configured to supply power to the logic circuit.

According to a seventh aspect, this application provides another chip. The another chip includes an input interface, an output interface, a processor, and a storage. The input interface, the output interface, the processor, and the storage are connected to each other through an internal connection path. The processor is configured to execute code in the storage. When the code is executed, the processor is configured to perform the method according to any possible implementation of the first aspect.

**BRIEF DESCRIPTION OF DRAWINGS**

FIG. 1 is a diagram of a hardware structure of a server according to an embodiment of this application;

FIG. 2 is a schematic flowchart of a memory fault prediction method according to an embodiment of this application;

FIG. 3 is a diagram of an error correction unit according to an embodiment of this application;

FIG. 4 is a schematic flowchart of another memory fault prediction method according to an embodiment of this application;

FIG. 5 is a graphical comparison diagram of an error location distribution and a reference location distribution;

FIG. 6 is a schematic flowchart of another memory fault prediction method according to an embodiment of this application; and

FIG. 7 is a block diagram of a memory fault prediction apparatus according to an embodiment of this application.

## DESCRIPTION OF EMBODIMENTS

To make the objectives, technical solutions, and advantages of this application clearer, the following further describes the implementations of this application in detail with reference to the accompanying drawings.

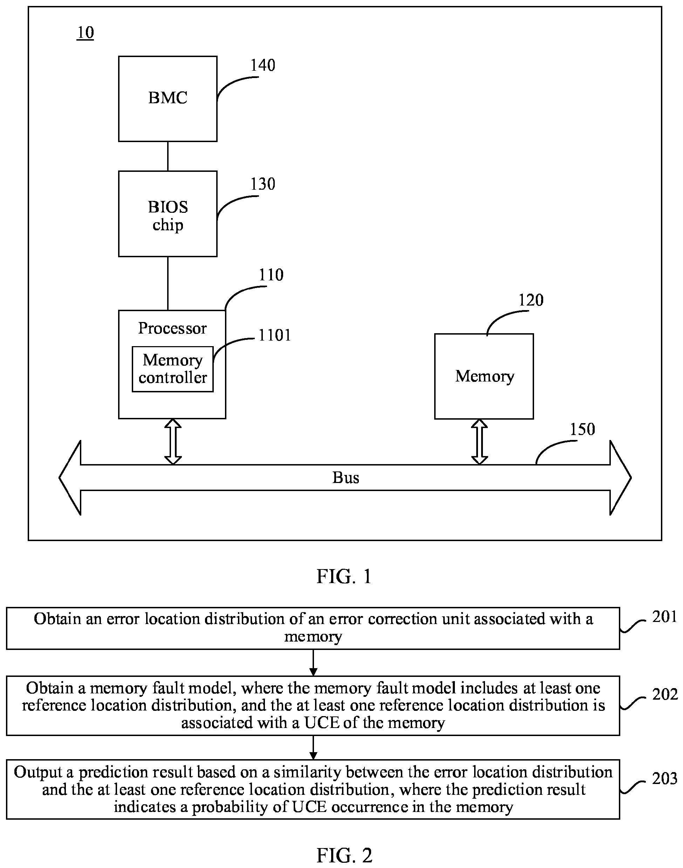

FIG. 1 is a diagram of a hardware structure of a server according to an embodiment of this application. As shown in FIG. 1, the server 10 includes at least a processor 110, a memory 120, a basic input/output system (basic input/output system, BIOS) 130, and a baseboard management controller (baseboard management controller, BMC) 140. The processor 110 and the memory 120 are connected through a bus 150. The BMC 140 and the processor 110 are separately connected to the BIOS 130.

The processor 110 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits. Optionally, there may be one or more processors 110. When the processor 110 is a CPU, the CPU may have one or more CPU cores.

The memory 120 may be configured to temporarily store computer-executable program code and data. The memory 120 has features such as a high data read/write speed, and may be used as temporary data storage space of a running application program. The memory 120 may use one or more of the following types of storages: a dynamic random access memory (dynamic random access memory, DRAM), a double data rate synchronous dynamic random access memory (double data rate synchronous dynamic random access memory, DDR SDRAM) (DDR for short), a low power DDR (low power DDR, LPDDR), a high bandwidth memory (high bandwidth memory, HBM), a phase change memory (phase change memory, PCM), a resistive random access memory (resistive random access memory, RRAM or ReRAM), a magneto-resistive random access memory (magneto-resistive random access Memory, MRAM), a ferro-electric random access memory (ferro-electric random access memory, FeRAM), a nano random access memory (nano random access memory, NRAM), a static random access memory (Static Random Access Memory, SRAM), or the like. During actual application, the server 10 may include one or more memories 120. When the server 10 is configured with a plurality of memories 120, the plurality of memories 120 may be memories of a same type, or may be memories of different types.

In some examples, the processor 110 includes a memory controller 1101. The memory controller 1101 is configured to manage the memory 120 and communicate with the processor 110. In the server 10, data exchange is performed between the processor 110 and the memory 120 via the memory controller 1101. For example, when receiving a data write request sent by the processor 110, the memory controller 1101 stores data in the data write request in the memory 120. For another example, when receiving a data read request sent by the processor 110, the memory controller 1101 reads data from the memory 120 based on a memory address carried in the data read request, and returns the read data to the processor 110.

The memory controller 1101 may detect whether an error occurs in the memory 120. After detecting that the error occurs in the memory 120, the memory controller 1101 reports the error to the BIOS 130, and then the BIOS 130 reports the error to the BMC 140 for processing. After processing, the BMC 140 feeds back a processing result to the BIOS 130, the BIOS 130 delivers a command to trigger the processor 110 to perform a corresponding operation, and the BIOS 130 accesses the memory 120 via the memory controller 1101.

The BMC 140 is also referred to as an out-of-band controller. The BMC 140 stores program code of the solutions of this application. By executing the program code, the memory fault prediction method provided in embodiments of this application may be implemented. In some examples, the BMC 140 may be an independent chip.

In a possible implementation, the chip may include a processor and a storage. The processor is configured to invoke, from the storage, and run program code stored in the storage, so that an electronic device in which the chip is mounted performs the memory fault prediction method provided in embodiments of this application.

In another possible implementation, the chip includes a logic circuit and a power supply circuit. The logic circuit is configured to implement the memory fault prediction method provided in embodiments of this application. The power supply circuit is electrically connected to the logic circuit, and is configured to supply power to the logic circuit. For example, the logic circuit may be implemented by using a digital signal processor (digital signal processor, DSP), an application-specific integrated circuit (application-specific integrated circuit, ASIC), a programmable logic device (programmable logic device, PLD), a discrete gate or a transistor logic device, a discrete hardware component, or the like. The PLD may be a complex programmable logic device (complex programmable logic device, CPLD), a field programmable gate array (field programmable gate array, FPGA), a generic array logic (generic array logic, GAL), a data processing unit (data processing unit, DPU), a system on chip (system on chip, SoC), or any combination thereof.

The bus 150 may include a path for transferring information between components (for example, the processor 110 and the memory 120) of the server 10.

It should be noted that the memory controller 1101 in FIG. 1 is disposed in the processor 110. In another possible implementation, the memory controller 1101 may alternatively be a component outside the processor 110, and is connected to the processor 110 through a bus.

It should be further noted that the structure shown in FIG. 1 does not constitute a specific limitation on the server. In some other embodiments of this application, the server may include more or fewer components than those shown in the figure. For example, the server may further include an external storage (for example, a hard disk), or the like. Alternatively, the server may further combine some components, some components may be split, or different component arrangements may be used.

An architecture of the server is not limited in this embodiment of this application. For example, the server 10 may be a server of an X86 architecture or a server of a non-X86 architecture. A form of the server is not limited in this embodiment of this application either. For example, the server may be a blade server, a high-density server, a rack server, a high-performance server, or the like.

Physical granularities of the memory in descending order are as follows: a memory module (also referred to as a dual inline memory module (dual inline memory module, DIMM)), a memory rank (rank), a memory chip (also referred to as a memory device (device)), a memory bank (bank), a row (row) or a column (column), and a memory cell (cell).

Each memory module has at least one memory rank, and each memory rank may include a plurality of memory chips. When the memory module has a plurality of memory ranks, all the memory ranks include a same quantity of memory chips. The quantity of memory chips in each memory rank varies with a data bit width of the memory chip, and a product of the data bit width and the quantity of the memory chips is a memory bit width. Each memory chip may be divided into a plurality of memory banks. When the memory chip stores data, the data is written into the memory bank in a unit of bit. In addition, the plurality of memory banks can be grouped into one memory bank group (bankgroup). The memory bank includes a plurality of memory cells arranged in a form of a two-dimensional matrix. In the memory bank, one memory cell may be located by using a row and a column, and each memory cell is configured to store one bit of data. A smallest unit of a memory fault is a memory cell in a memory bank.

In a running process of the server 10, the memory 120 may be faulty. For example, for the DRAM, a memory cell of the DRAM usually includes a transistor and a capacitor, and a quantity of electric charges carried on the capacitor determines whether the memory cell of the DRAM is 1 or 0. Due to impact of an external environment or a hardware defect of the transistor, an error may occur in the memory. That is, the memory is faulty.

After the memory is faulty, an error correction algorithm (for example, error checking and correcting (ECC)) is used for correcting the error. If the error is corrected, the error is referred to as a CE. If the error exceeds an error correction capability of the error correction algorithm, the error cannot be corrected, and is referred to as a UCE. The UCE may cause problems such as device breakdown. Therefore, before the UCE occurs, a probability of UCE occurrence needs to be predicted, that is, a memory fault is predicted, so as to reduce occurrence of cases such as the device breakdown, and minimize a loss caused by the memory fault.

FIG. 2 is a schematic flowchart of a memory fault prediction method according to an embodiment of this application. The method may be performed by the BMC in FIG. 1. As shown in FIG. 2, the method includes the following steps.

201: Obtain an error location distribution of an error correction unit associated with a memory.

The memory includes at least one memory device. In other words, the memory herein may refer to one memory device, or a memory module including a plurality of memory devices. Each memory device includes a plurality of memory cells arranged in an array.

The error correction unit is a smallest error correction unit required for an error correction algorithm that is used by the memory. The error correction unit associated with the memory means that the error correction unit includes data that is obtained through burst read in some memory cells of the memory. Each error correction unit includes a plurality of data bits obtained from the plurality of memory cells of each memory device of the memory through a plurality of consecutive times of burst read. Each of the plurality of data bits corresponds to one memory cell in the memory. That is, each data bit corresponds to one memory cell, and different data bits correspond to different memory cells. Herein, one data bit is one bit of data read from a corresponding memory cell.

Each error correction unit includes a plurality of bursts, each burst includes a plurality of data bits, and the plurality of data bits are in one-to-one correspondence with a plurality of data channels of the memory. For example, a quantity of bursts in the error correction unit may be equal to half of a burst length. The burst is a manner in which data transmission is continuously performed for adjacent memory cells in a same row, and a quantity of continuous transmission periodicities is the burst length.

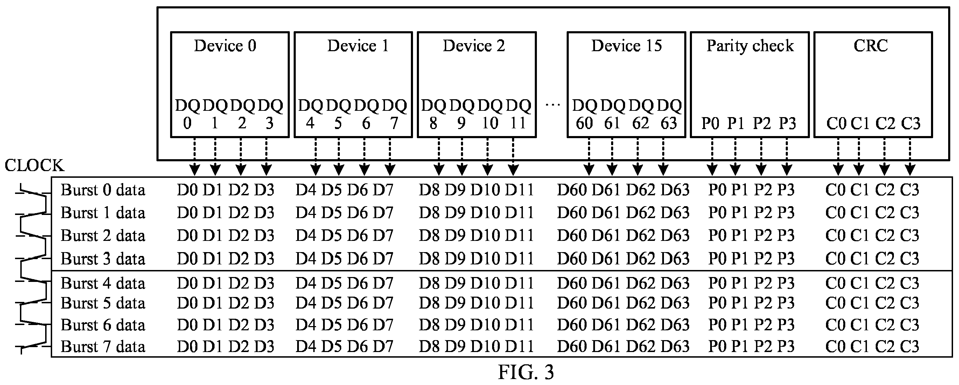

For example, as shown in FIG. 3, it is assumed that one memory module includes one memory rank, and the memory rank includes 18 memory devices. 16 memory devices (chips 0 to 15) are configured to store valid data, one memory device is configured to store parity check data, and one memory device is configured to store cyclic redundancy check (cyclic redundancy check, CRC) data.

For one time of memory access, a memory generates a plurality of bursts in batches (that is, a plurality of times of burst read are generated for one time of memory access, and each time of burst read corresponds to one burst). Each burst generally includes a plurality of data bits (for example, 64 data bits in FIG. 3, that is, 64 bits of data), and a quantity of bits of data included in each burst is equal to a sum of quantities of DQs of all memory devices in the memory. Herein, each DQ is one data transmission channel of the memory device, and each data transmission channel corresponds to one data transmission pin of the memory device. Different bit positions in each burst correspond to different DQs, and same bit positions in different bursts share one DQ. In FIG. 3, data corresponding to each burst includes 64-bit valid data (that is, D0 to D63), 4-bit parity check data (that is, PO to P3), and 4-bit CRC data (that is, CO to C3). If the burst length is 8, data corresponding to four bursts forms one error correction unit, and each error correction unit includes 288-bit data. For example, data corresponding to bursts 0 to 4 forms one error correction unit, and data corresponding to bursts 4 to 7 forms one error correction unit. The valid data herein refers to data other than the check data.

The error location distribution indicates a location of an error data bit in all data bits of the error correction unit, and the error location distribution causes CE occurrence in the memory.

Due to an IO feature of a DRAM, an error may occur in all data bits related to one burst or one DQ. When locations of error data bits are distributed across a plurality of bursts in a plurality of data bits that are of an error correction unit and that correspond to a same memory device, and/or an error occurs in a plurality of DQs, a UCE may occur in the memory device.

When an error occurs in a data bit corresponding to a specific memory device in an error correction unit, a BIOS reports fault information to a BMC. The fault information includes a fault location, fault time, an error location distribution, and the like. The fault location is a physical address at which a memory fault occurs. For example, the physical address indicates a bank, a row and/or a column, a memory chip, a memory rank, and a memory module in which a memory cell corresponding to the error data bit is located. The fault time refers to time at which the memory fault occurs. During implementation, the error location distribution may include only locations of all data bits corresponding to one memory device in which an error data bit in one error correction unit is located, and it is considered that no error occurs in another data bit of the error correction unit. Therefore, the error location distribution may describe a location of an error data bit of each data bit of one error correction unit.

During implementation, the error location distribution may be represented by a part of a value of a register used for recording memory error information.

For example, in FIG. 3, from top to bottom, a 1st box represents an error correction unit 0, and a 2nd box represents an error correction unit 1. If an error occurs in a memory device 0 in the error correction unit 0, the error location distribution indicates a location of an error data bit of the memory device 0 in 16 data bits in the error correction unit 0.

202: Obtain a memory fault model, where the memory fault model includes at least one reference location distribution, and the at least one reference location distribution is associated with a UCE of the memory.

In a first possible implementation, that the reference location distribution is associated with the UCE of the memory means that the reference location distribution is an error location distribution that causes UCE occurrence in the memory.

Each reference location distribution may be determined by a fault injection test. For example, test data is written into the memory in error correction units, and in a process of writing the test data, a fault injection tool is used for data tampering at a specific location of the test data written into the memory, so as to implement a memory data error at the specific location. If a UCE occurs in the memory after test data is written, a corresponding error location distribution is determined as a reference location distribution. During implementation, all error location combinations may be traversed to obtain all possible reference location distributions, that is, obtain the memory fault model.

In a second possible implementation, that the reference location distribution is associated with the UCE of the memory means an error location distribution corresponding to a CE associated with the UCE. The CE associated with the UCE means that after the error location distribution corresponding to the CE appears, the UCE occurs in the memory, or a probability of UCE occurrence in the memory is high.

In the second possible implementation, the reference location distribution may be obtained by training a neural network model. For example, an error location distribution of a CE occurring in a specified time period before the UCE occurs in the memory having UCE occurrence is used as a positive sample, an error location distribution of the CE occurring in the memory having only CE occurrence is used as a negative sample, and an initial neural network model is trained to obtain the memory fault model. The memory fault model may represent at least one reference location distribution.

Alternatively, statistics are collected on the error location distribution of the CE occurring in the specified time period before the UCE occurs in the memory having UCE occurrence, to obtain the memory fault model. For example, error location distributions of the CE occurring in the specified time period before the UCE occurs in the memory having UCE occurrence may be sorted according to a descending order of times, and first X error location distributions are used as reference location distributions, where X is a positive integer and is a specified value.

203: Output a prediction result based on a similarity between the error location distribution and the at least one reference location distribution, where the prediction result indicates a probability of UCE occurrence in the memory.

In the second possible implementation, the memory fault model is the neural network model, the error location distribution of the error correction unit is used as an input of the memory fault model, and an output of the memory fault model indicates the probability of UCE occurrence in the memory.

The method may be performed each time it is detected that the CE occurs in the memory, may be performed when a quantity of times that the CE occurs in the memory reaches a quantity threshold, or may be performed periodically. When the method is periodically performed, a length of a periodicity may be set based on an actual requirement, and may be in a unit of second, in a unit of minute, in a unit of hour, or the like. This is not limited in this embodiment of this application.

In this embodiment of this application, because the reference location distribution is associated with the UCE, the similarity between the error location distribution when the CE occurs in the memory and the at least one reference location distribution is associated with the probability of UCE occurrence in the memory, and may reflect a magnitude of the probability of UCE occurrence in the memory. A higher similarity between the error location distribution and the reference location distribution indicates a higher probability of UCE occurrence in the memory. On the contrary, a lower similarity between the error location distribution and the reference location distribution indicates a lower probability of UCE occurrence in the memory. Therefore, the probability of UCE occurrence in the memory may be predicted based on the similarity between the error location distribution when the CE occurs in the memory and the at least one reference location distribution. When the CE occurs in the memory, a memory fault may be predicted based on the error location distribution of the error correction unit corresponding to the CE, without waiting for collecting a large amount of CE information. Therefore, timeliness of memory fault prediction is high. In addition, memory fault prediction is performed based on the similarity between the error location distribution of the error correction unit and the reference location distribution, that is, based on a UCE generation mechanism. This helps improve accuracy of the memory fault prediction. The prediction method may be used in combination with another fault prediction method in the related technology, to further improve the accuracy of the memory fault prediction.

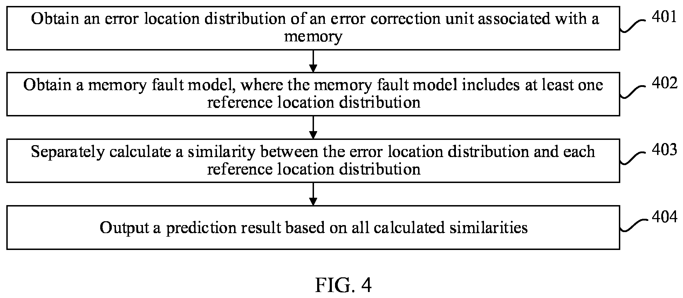

The first possible implementation is described in detail below with reference to FIG. 4.

FIG. 4 is a schematic flowchart of a memory fault prediction method according to an embodiment of this application. As shown in FIG. 4, the method includes the following steps.

401: Obtain an error location distribution of an error correction unit associated with a memory.

For related content, refer to 301, and detailed descriptions are omitted herein.

In a possible implementation, the error location distribution is represented by a plurality of first elements, and the plurality of first elements are in one-to-one correspondence with a plurality of data bits. Each first element indicates whether one corresponding data bit is an error data bit.

In some examples, the error location distribution is represented by a first binary sequence. The first binary sequence includes a plurality of first data bits, and each first data bit indicates whether an error occurs in one data bit in the error correction unit. That is, each first data bit is one first element.

A quantity of first data bits in the first binary sequence is equal to a quantity of data bits in one error correction unit, or the quantity of first data bits in the first binary sequence is equal to a quantity of data bits corresponding to a same memory device in one error correction unit. For ease of calculating a similarity, the following mainly uses an example, for description, in which the quantity of first data bits in the first binary sequence is equal to the quantity of data bits corresponding to the same memory device in one error correction unit.

Each first data bit uniquely corresponds to one data bit in the error correction unit, and indicates whether the error occurs in the corresponding data bit. Optionally, when the first data bit is a first value, it indicates that the error occurs in the corresponding data bit; or when the first data bit is a second value, it indicates that no error occurs in the corresponding data bit. In some examples, the first value is 0, and the second value is 1. In some other examples, the first value is 1, and the second value is 0.

In some other examples, the error location distribution is represented by a first graph, the first graph includes a plurality of first units arranged in an array, and each first unit indicates whether an error occurs in one data bit in the error correction unit. That is, each first unit is one first element. A quantity of first units in the first graph is equal to the quantity of data bits included in one error correction unit, or the quantity of first units in the first graph is equal to the quantity of data bits corresponding to the same memory device in one error correction unit. For ease of calculating the similarity, the following mainly uses an example, for description, in which the quantity of first units in the first graph is equal to the quantity of data bits corresponding to one error correction unit and the quantity of data bits corresponding to the same memory chip.

A row of the first graph represents a burst, and a column of the first graph represents a DQ. In the first graph, one data bit may be located by an index of one row and one column. The first graph is a binarized graph, and each first unit may include one or more pixels. When each first unit includes a plurality of pixels, the first unit may be in a square shape, a circle shape, or the like. When the first unit is a third value, it indicates that the error occurs in the corresponding data bit; or when the first unit is a fourth value, it indicates that no error occurs in data of the corresponding data bit. Herein, the third value and the fourth value may be pixel values (for example, grayscale values). In some examples, the third value is 0, and the fourth value is 255. In some other examples, the third value is 255, and the fourth value is 0.

402: Obtain a memory fault model, where the memory fault model includes at least one reference location distribution.

Each reference location distribution is an error location distribution that causes UCE occurrence in the memory.

403: Separately calculating a similarity between the error location distribution and each reference location distribution.

Each reference location distribution includes a plurality of second elements, and each second element indicates whether an error occurs in one data bit. The plurality of first elements are in one-to-one correspondence with the plurality of second elements, and a corresponding first element and a corresponding second element are related to a same data bit.

When the error location distribution is represented by the first binary sequence, the reference location distribution is represented by a second binary sequence, where the second binary sequence includes a plurality of second data bits, and each second data bit indicates whether an error occurs in one data bit. That is, each second data bit is one second element. Similar to the first binary sequence, when the second data bit is a first value, it indicates that the error occurs in the corresponding data bit; or when the second data bit is a second value, it indicates that no error occurs in the corresponding data bit. An $i^{th}$ second data bit in the second binary sequence and an $i^{th}$ first data bit in the first binary sequence correspond to a same data bit of an error correction unit. Herein, i is an integer.

When the error location distribution is represented by the first binary sequence, and the reference location distribution is represented by the second binary sequence, step 402 includes: calculating a Hamming distance between the first binary sequence and the second binary sequence. The Hamming distance is the similarity between the error location distribution and the reference location distribution. This calculation manner is simple, and helps simplify a process of memory fault prediction and improve efficiency of the memory fault prediction.

The first binary sequence is compared with the second binary sequence bit by bit, and a quantity of first data bits that differ in value from second data bits in same data bit positions is determined as the Hamming distance between the first binary sequence and the second binary sequence.

For example, the error location distribution is 0x2270, and the corresponding first binary sequence is 0b 0010 0010 0111 0000. The reference location distribution is 0x2670, and the corresponding second binary sequence is 0b 0010 0110 0111 0000. The underscore indicates a first data bit that differs in value from a second data bit in a same data bit position. There is one first data bit that satisfies the condition in total. Therefore, the Hamming distance between the first binary sequence and the second binary sequence is 1.

For another example, the error location distribution is 0x0070, and the corresponding first binary sequence is 0b 0000 0000 0111 0000. The reference location distribution is 0x2670, and the corresponding second binary sequence is 0b 0010 0110 0111 0000. The underscores indicate first data bits that differ in value from second data bits in same data bit positions. There are three first data bits that satisfy the condition in total. Therefore, the Hamming distance between the first binary sequence and the second binary sequence is 3.

For another example, the error location distribution is 0x0884, and the corresponding first binary sequence is 0b 0000 1000 1000 0100. The reference location distribution is 0x2670, and the corresponding second binary sequence is 0b 0010 0110 0111 0000. The underscores indicate first data bits that differ in value from second data bits in same data bit positions. There are eight first data bits that satisfy the condition in total. Therefore, the Hamming distance between the first binary sequence and the second binary sequence is 8.

In these examples, each error location distribution is a part of a value of a register that records memory error information.

It can be learned that a larger Hamming distance indicates a lower similarity between the error location distribution and the reference location distribution; and on the contrary, a smaller Hamming distance indicates a higher similarity between the error location distribution and the reference location distribution.

The Hamming distance is used as the similarity. To be specific, a quantity of first elements that are in the error location distribution and that are different from the corresponding second elements is counted, and the quantity obtained through statistics collection is used as the similarity. In another embodiment, a quantity of first elements that are in the error location distribution and that are the same as corresponding second elements may alternatively be used as the similarity. In this case, a larger quantity obtained through statistics collection indicates a higher similarity, and a smaller quantity obtained through statistics collection indicates a lower similarity.

If the quantity of first elements that are in the error location distribution and that are the same as the corresponding second elements is used as the similarity, a difference between a length of the first binary sequence and the Hamming distance may be added to a quantity of data bits of another corresponding memory device in the error correction unit, to obtain the similarity; or the difference between the length of the first binary sequence and the Hamming distance is used as the similarity.

In another embodiment, an array may alternatively be used for representing the error location distribution and the reference location distribution, where each number in the array that represents the error location distribution is one first element, and each number in data that represents the reference location distribution is one second element.

When the error location distribution is represented by the first graph, the reference location distribution is represented by the second graph. The second graph includes a plurality of second units arranged in an array, and each second unit indicates whether an error occurs in one data bit in one error correction unit. That is, each second unit is one second element. Similar to the first graph, the second graph is also a binarized graph. When the second unit is a third value, it indicates that the error occurs in the corresponding data bit; or when the second unit is a fourth value, it indicates that no error occurs in the corresponding data bit.

When the error location distribution is represented by the first graph, and the reference location distribution is represented by the second graph, step 402 includes: using an overlapping degree between the first graph and the second graph as a similarity.

The first graph includes a first faulty unit and a first non-faulty unit. The first faulty unit is a first unit indicating that an error occurs in a data bit, and the first non-faulty unit is a first unit indicating that no error occurs in a data bit. That is, the first non-faulty unit is a first unit other than the first faulty unit.

The second graph includes a second faulty unit and a second non-faulty unit. The second faulty unit is a second unit indicating that an error occurs in a data bit, and the second non-faulty unit is a second unit indicating that no error occurs in a data bit. That is, the second non-faulty unit is a second unit other than the second faulty unit.

In this embodiment of this application, the overlapping degree is in direct proportion to a quantity of first faulty units that are in the first graph and that have same locations as second faulty units in the second graph.

In a possible implementation, the overlapping degree between the first graph and the second graph is calculated based on the quantity of first faulty units that are in the first graph and that have the same locations as the second faulty units in the second graph. For example, a first faulty unit in a plurality of first units and a second faulty unit in a plurality of second units may be separately determined, and then an overlapping degree is determined based on a quantity of first faulty units that have same locations as second faulty units and a quantity of second faulty units.

In some examples, a ratio of the quantity of first faulty units that have the same locations as the second faulty units to the quantity of second faulty units may be determined as the overlapping degree.

In some other examples, the quantity of first faulty units that have the same locations as the second faulty units is first adjusted based on a location of a first non-faulty unit that has the same location as the second faulty unit and a location of a first faulty unit, to obtain an adjusted quantity; and then a ratio of the adjusted quantity to the quantity of second faulty units is determined as the overlapping degree.

Optionally, the quantity of first faulty units that have the same locations as the second faulty units is adjusted based on a first non-faulty unit that has the same location as the second faulty unit and that belongs to a same DQ and/or a same burst as the first faulty unit. This is because in an error correction unit, if an error occurs in a data bit, there is a high probability of error occurrence in a neighboring data bit that is in a same DQ and/or a same burst as the data bit.

The following describes a manner of adjusting the quantity of first faulty units that have the same locations as the second faulty units.

In some examples, in an error correction unit, if an error occurs in a data bit, there is a high probability of error occurrence in a neighboring data bit that is in a same DQ as the data bit. Therefore, a quantity of first units that are in first units except the first faulty unit and that have the same locations as the second faulty units and belong to the same DQ as the first faulty unit is adjusted to a specified value; and then the quantity of first faulty units that have the same locations as the second faulty units is added to a sum of all specified values, to obtain an adjusted quantity. The specified value is greater than 0 and less than or equal to 0.5. For example, the specified value may be 0.1, 0.2, 0.3, or the like. A quantity of fifth units is adjusted based on a quantity of data bits in which no error occurs currently but have a high error probability. This helps make the calculated overlapping degree more accurate.

In some other examples, in an error correction unit, if an error occurs in a data bit, there is a high probability of error occurrence in data of a data bit that is neighboring to and is in a same burst as the data bit. Therefore, a quantity of first units that are in first units except the first faulty unit and that have the same locations as the second faulty units and belong to the same burst as the first faulty unit is adjusted to a specified value. Then the quantity of first faulty units that have the same locations as the second faulty units is added to a sum of all specified values, to obtain an adjusted quantity. The specified value is greater than 0 and less than or equal to 0.5. For example, the specified value may be 0.1, 0.2, 0.3, or the like.

In still some other examples, a quantity of first units that are in first units except the first faulty unit and that have the same locations as the second faulty units and belong to the same DQ as the first faulty unit is adjusted to a specified value, and a quantity of first units that are in first units except the first faulty unit and that have the same locations as the second faulty units and belong to the same burst as the first faulty unit is adjusted to a specified value. Then, the quantity of first faulty units that have the same locations as the second faulty units is added to a sum of all specified values, to obtain an adjusted quantity. The specified value is greater than 0 and less than or equal to 0.5. For example, the specified value may be 0.1, 0.2, 0.3, or the like.

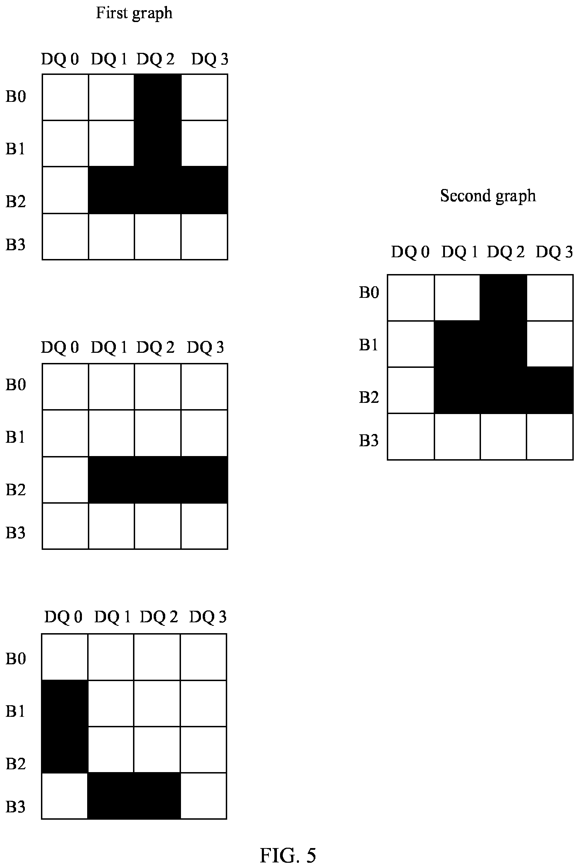

The following describes, with reference to FIG. 5, a first manner and a second manner of calculating the overlapping degree by using examples. In FIG. 5, in each first graph and each second graph, a black rectangle represents a corresponding data bit in which an error occurs, and a white rectangle represents a data bit in which no error occurs. To be specific, in the first graph, each rectangle represents one first unit, and a black rectangle represents a first faulty unit; and in the second graph, each rectangle represents one second unit, and a black rectangle represents a second faulty unit. There are six second faulty units in total in the second graph.

The first manner of calculating the overlapping degree: A ratio of the quantity of first faulty units that have the same locations as the second faulty units to the quantity of second faulty units is used as the overlapping degree.

In a 1st first graph, there are five first faulty units, and locations of all the first faulty units are the same as locations of second faulty units in the second graph. Therefore, there are five first faulty units that have the same locations as the second faulty units, and an overlapping degree is equal to 0.83. In a 2nd first graph, there are three first faulty units, and locations of all the first faulty units are the same as locations of second faulty units in the second graph. Therefore, there are three first faulty units that have the same locations as the second faulty units, and an overlapping degree is equal to 0.5. In a 3rd first graph, there are four first faulty units, and locations of all the first faulty units are different from locations of second faulty units in the second graph. Therefore, there are zero fifth units, and an overlapping degree is equal to 0.

The second manner of calculating the overlapping degree: The quantity of first faulty units that have the same locations as the second faulty units is adjusted based on the first non-faulty unit that has the same location as the second faulty unit and that belongs to the same DQ as the first faulty unit, and a ratio of the adjusted quantity to the quantity of second faulty units is used as the overlapping degree.

In a 1st first graph, there are five first faulty units, and locations of all the first faulty units are the same as locations of second faulty units in the second graph. Therefore, there are five first faulty units that have the same locations as the second faulty units. In all first non-faulty units (that is, in white rectangles), a first non-faulty unit corresponding to DQ 1 and burst 1 is neighboring to a first faulty unit corresponding to DQ 1 and burst 2, and a second unit corresponding to DQ 1 and burst 1 is a second faulty unit. Therefore, the first unit corresponding to DQ 1 and burst 1 corresponds to a specified value. Assuming that the specified value is 0.3, the adjusted quantity is 5.3, and an overlapping degree is 0.88.

In a 2nd first graph, there are three first faulty units that have the same locations as second faulty units. In all first non-faulty units (that is, in white rectangles), a first non-faulty unit corresponding to DQ 1 and burst 1 is neighboring to a first faulty unit corresponding to DQ 1 and burst 2, and the second unit corresponding to DQ 1 and burst 1 is the second faulty unit; and a first non-faulty unit corresponding to DQ 2 and burst 1 is neighboring to a first faulty unit corresponding to DQ 2 and burst 2, and a second unit corresponding to DQ 2 and burst 1 is a second faulty unit. Therefore, the first unit corresponding to DQ 1 and burst 1 and the first unit corresponding to DQ 2 and burst 1 correspond to a specified value. Assuming that the specified value is 0.3, the adjusted quantity is 3.6, and an overlapping degree is 0.6.

In a 3rd first graph, there are zero first faulty units that have the same locations as second faulty units. In all first non-faulty units (that is, in white rectangles), a first non-faulty unit corresponding to DQ 1 and burst 2 is neighboring to a first faulty unit corresponding to DQ 1 and burst 3, and the second unit corresponding to DQ 1 and burst 2 is the second faulty unit; and a first non-faulty unit corresponding to DQ 2 and burst 2 is neighboring to a first faulty unit corresponding to DQ 2 and burst 3, and a second unit corresponding to DQ 2 and burst 2 is a second faulty unit. Therefore, the first unit corresponding to DQ 1 and burst 2 and the first unit corresponding to DQ 2 and burst 2 correspond to a specified value. Assuming that the specified value is 0.3, the adjusted quantity is 0.6, and an overlapping degree is 0.1.

In another possible implementation, the overlapping degree between the first graph and the second graph is calculated based on the quantity of first faulty units that are in the first graph and that have the same locations as the second faulty units in the second graph and a quantity of first non-faulty units that are in the first graph and that have the same locations as second non-faulty units in the second graph. That is, calculation is performed based on a quantity of overlapping units in the first graph and the second graph. The overlapping units include the first faulty unit that has the same location as the second faulty unit and the first non-faulty unit that has the same location as the second non-faulty unit.

For example, a quantity of first faulty units that have the same locations as the second faulty units and a quantity of first non-faulty units that have the same locations as the second non-faulty units may be determined, that is, the quantity of overlapping units is determined; and the overlapping degree is determined based on the quantity of overlapping units and a quantity of first units.

In some examples, a ratio of the quantity of overlapping units to the quantity of first units may be determined as the overlapping degree. In some other examples, the quantity of overlapping units is first adjusted based on a location of a first non-faulty unit that has the same location as the second faulty unit and a location of the first faulty unit, to obtain an adjusted quantity of overlapping units; and then a ratio of the adjusted quantity of overlapping units to the quantity of first units is determined as the overlapping degree.

For a manner of adjusting the quantity of overlapping units, refer to the foregoing manner of adjusting the quantity of first faulty units that have the same locations as the second faulty units. Detailed descriptions are omitted herein.

The following describes, with reference to FIG. 5, a third manner and a fourth manner of calculating the overlapping degree by using examples. In FIG. 5, in each first graph and each second graph, a black rectangle indicates that an error occurs in a corresponding data bit, and a white rectangle indicates that no error occurs in a corresponding data bit. To be specific, in the first graph, each rectangle represents one first unit, a black rectangle represents a first faulty unit, and a white rectangle represents a first non-faulty unit; and in the second graph, each rectangle represents one second unit, a black rectangle represents a second faulty unit, and a white rectangle represents a second non-faulty unit. The first graph includes 16 first units.

The third manner of calculating the overlapping degree: A ratio of, to the quantity of first units, a sum of the quantity of first faulty units that have the same locations as the second faulty units and the quantity of first non-faulty units that have the same locations as the second non-faulty units is determined as the overlapping degree.

In a 1st first graph, a quantity of overlapping units is 15, and an overlapping degree is equal to 0.94. In a 2nd first graph, a quantity of overlapping units is 13, and an overlapping degree is equal to 0.81. In a 3rd first graph, a quantity of overlapping units is 6, and an overlapping degree is equal to 0.38.

The fourth manner of calculating the overlapping degree: A ratio of the adjusted quantity of overlapping units to the quantity of first units is used as the overlapping degree.

In a 1st first graph, there are 15 overlapping units. In all first non-faulty units (that is, in white rectangles), a first non-faulty unit corresponding to DQ 1 and burst 1 is neighboring to a first faulty unit corresponding to DQ 1 and burst 2, and a second unit corresponding to DQ 1 and burst 1 is a second faulty unit. Therefore, the first unit corresponding to DQ 1 and burst 1 corresponds to a specified value. Assuming that the specified value is 0.3, an adjusted quantity of overlapping units is 15.3, and an overlapping degree is 0.96.

In a 2nd first graph, there are 13 overlapping units. In all first non-faulty units (that is, in white rectangles), a first non-faulty unit corresponding to DQ 1 and burst 1 is neighboring to a first faulty unit corresponding to DQ 1 and burst 2, and the second unit corresponding to DQ 1 and burst 1 is the second faulty unit; and a first non-faulty unit corresponding to DQ 2 and burst 1 is neighboring to a first faulty unit corresponding to DQ 2 and burst 2, and a second unit corresponding to DQ 2 and burst 1 is a second faulty unit. Therefore, the first unit corresponding to DQ 1 and burst 1 and the first unit corresponding to DQ 2 and burst 1 correspond to a specified value. Assuming that the specified value is 0.3, an adjusted quantity of overlapping units is 13.6, and an overlapping degree is 0.85.

In a 3rd first graph, there are six first faulty units that have the same locations as second faulty units. In all first non-faulty units (that is, in white rectangles), a first non-faulty unit corresponding to DQ 1 and burst 2 is neighboring to a first faulty unit corresponding to DQ 1 and burst 3, and the second unit corresponding to DQ 1 and burst 2 is the second faulty unit; and a first non-faulty unit corresponding to DQ 2 and burst 2 is neighboring to a first faulty unit corresponding to DQ 2 and burst 3, and a second unit corresponding to DQ 2 and burst 2 is a second faulty unit. Therefore, the first unit corresponding to DQ 1 and burst 2 and the first unit corresponding to DQ 2 and burst 2 correspond to a specified value. Assuming that the specified value is 0.3, an adjusted quantity of overlapping units is 6.6, and an overlapping degree is 0.41.

It can be learned that a larger overlapping degree indicates a higher similarity between the error location distribution and the reference location distribution; and on the contrary, a smaller overlapping degree indicates a lower similarity between the error location distribution and the reference location distribution.

404: Output a prediction result based on all the calculated similarities.

The prediction result indicates a probability of UCE occurrence in the memory.

In an implementation, the prediction result includes a highest similarity in all the calculated similarities. In another implementation, the prediction result includes a risk level corresponding to the highest similarity in all the calculated similarities.

For example, when the similarity is represented by a Hamming distance, the highest similarity is a smallest Hamming distance. Step 403 includes: outputting, based on a distance interval to which the Hamming distance belongs and a correspondence between the distance interval and a risk level, a risk level corresponding to a distance interval to which the smallest Hamming distance belongs. The correspondence includes N distance intervals and N risk levels, and different distance intervals correspond to different risk levels, where N is an integer and N is greater than 1.

For example, N is equal to 3. To be specific, the risk levels are classified into three risk levels: high, medium, and low. A distance interval 1 corresponds to the high risk level, a distance interval 2 corresponds to the medium risk level, and a distance interval 3 corresponds to the low risk level.

A manner of classifying the distance intervals is not limited in this embodiment of this application, and may be adjusted based on an actual requirement. For example, the distance interval 1 may be [1,a1), the distance interval 2 may be [a1,a2), and the distance interval 3 may be [a2,a3]. For example, a1 is equal to 3, a2 is equal to 10, and a3 is equal to a quantity of data bits included in the error correction unit.

For another example, when the similarity is represented by the overlapping degree, the highest similarity is a largest overlapping degree. Step 403 includes: outputting, based on an overlapping degree interval to which the largest overlapping degree belongs and a correspondence between an overlapping degree interval and a risk level, a risk level corresponding to the overlapping degree interval to which the largest overlapping degree belongs, where the correspondence includes M overlapping degree intervals and M risk levels, different overlapping degree intervals correspond to different risk levels, and M is an integer and M is greater than 1.

For example, M is equal to 3. To be specific, the risk levels are classified into three risk levels: high, medium, and low. An overlapping degree interval 1 corresponds to the low risk level, an overlapping degree interval 2 corresponds to the medium risk level, and an overlapping degree interval 3 corresponds to the high risk level.

A manner of classifying the overlapping degree intervals is not limited in this embodiment of this application, and may be adjusted based on an actual requirement. For example, the overlapping degree interval 1 may be [0,b1), the overlapping degree interval 2 may be [b1,b2), and the overlapping degree interval 3 may be [b2,1]. For example, b1 is equal to 0.4, and b2 is equal to 0.8.

It should be noted that, when the memory fault model includes a plurality of reference location distributions, a probability of UCE occurrence that corresponds to each reference location distribution needs to be determined, and the prediction result is obtained based on the probability corresponding to each reference location distribution.

In a possible implementation, the prediction result may indicate a largest probability in probabilities corresponding to all reference location distributions. In another possible implementation, fusion processing may be performed on the probabilities corresponding to all the reference location distributions, to obtain a fusion result, and the prediction result indicates the fusion result.

For example, the fusion result may be calculated according to the following formula (1):

$$p=1-(1-p1)*(1-p2)......*(1-px) \quad (1)$$

p represents the fusion result, p1 represents a probability corresponding to a first reference location distribution, px represents a probability corresponding to an $x^{th}$ reference location distribution, and x represents a quantity of all reference location distributions.

Based on step 403 and step 404, the prediction result may be output based on a similarity between the error location distribution and at least one reference location distribution, where the prediction result indicates the probability of UCE occurrence in the memory.

Alternatively, in another embodiment, step 403 and step 404 may be replaced with: sequentially calculating a similarity between the error location distribution and each reference location distribution; and when a calculated similarity is higher than a similarity threshold, stopping calculating a similarity between the error location distribution and a remaining reference location distribution, and outputting a prediction result based on the similarity higher than the similarity threshold. For example, assuming that the memory fault model includes Y reference location distributions, a similarity between the error location distribution and a $j^{th}$ reference location distribution is first calculated, and if the similarity is higher than a similarity threshold, calculation is stopped, and a prediction result is output based on the similarity; or if the similarity is lower than or equal to the similarity threshold, a similarity between the error location distribution and a $(j+1)^{th}$ reference location distribution is calculated, until a similarity higher than the similarity threshold is calculated or until similarities corresponding to all reference location distributions are calculated. If the similarities corresponding to all the reference location distributions are calculated, a prediction result may be output based on a highest similarity in the calculated similarities. j is a positive integer, and j is less than or equal to Y.

If the similarity is higher than the similarity threshold, it indicates that the probability of UCE occurrence in the memory is extremely high. In this case, the prediction result may be obtained without continuing to calculate a similarity corresponding to another reference location distribution. Therefore, in a fault prediction process, the prediction result may be obtained without calculating the similarities corresponding to all the reference location distributions. This helps improve the efficiency of the fault prediction.

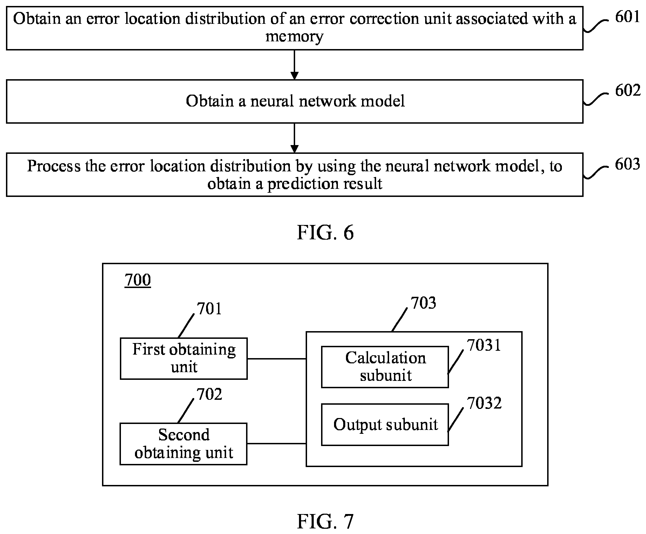

The first possible implementation is described in detail below with reference to FIG. 6. FIG. 6 is a schematic flowchart of a memory fault prediction method according to an embodiment of this application. As shown in FIG. 6, the method includes the following steps.

601: Obtain an error location distribution of an error correction unit associated with a memory.

602: Obtain a neural network model.

The neural network model is obtained through training by using a first-type sample and a second-type sample, the first-type sample is an error location distribution of a corresponding error correction unit when a CE occurs in the memory having only CE occurrence, and the second-type sample is an error location distribution of a corresponding error correction unit when a CE occurs in the memory having UCE occurrence before a UCE occurs.

603: Process the error location distribution by using the neural network model, to obtain a prediction result.

In this embodiment of this application, the neural network model includes but is not limited to a convolutional neural network (convolutional neural network, CNN) model, a recurrent neural network (recurrent neural network, RNN) model, a long short-term memory (long short-term memory, LSTM) network model, or the like.

Optionally, before step 601 is performed, the method further includes training the neural network model. A training process may be as follows: for the memory having only CE occurrence, obtaining an error location distribution corresponding to a CE that occurs in a first time period as a first-type sample (negative sample); for the memory having UCE occurrence, obtaining an error location distribution corresponding to a CE that occurs in a second time period before the UCE occurs as a second-type sample (positive sample); and training the neural network model by using the first-type sample and the second-type sample as a training set. A neural network model obtained through training is a memory fault model.

In this embodiment, the error location distribution, the first-type sample, and the second-type sample are all represented by graphs. For content of the graphs, refer to the first graph and the second graph in the foregoing embodiment. Detailed descriptions are omitted herein.

For example, a length of the first time period may be 24 hours. A length of the second time period may also be 24 hours. Optionally, a first label, for example, 0, may be added to the first-type sample, indicating that an actual probability of UCE occurrence that corresponds to the first-type sample is 0; and a second label, for example, 1, may be added to the second-type sample, indicating that an actual probability of UCE occurrence that corresponds to the second-type sample is 1.

The CNN model is used as an example. The neural network model includes a convolutional layer, a downsampling layer (also referred to as a pooling layer), a fully connected layer, and an output layer that are sequentially connected. The convolutional layer is configured to: extract a feature in an input graph, and input the extracted feature into the downsampling layer. The downsampling layer is configured to reduce a feature dimension, to reduce calculation complexity. The fully connected layer is configured to obtain a prediction probability based on an output of the downsampling layer. The output layer is configured to output the prediction probability.

An output of the neural network model may be a prediction probability of UCE occurrence in the memory. A loss function of the neural network model may be determined based on an error between the prediction probability output by the neural network model and the actual probability of UCE occurrence in the memory. The error between the prediction probability output by the neural network model and the actual probability of UCE occurrence in the memory may be represented by a mean squared error or a cross entropy between the prediction probability and the actual probability.

In this way, after training is completed, the neural network model may represent at least one reference location distribution. The reference location distribution is an error location distribution corresponding to a CE associated with the UCE. Herein, the CE associated with the UCE means that if the error location distribution corresponding to the CE appears in the memory, the UCE may occur in the memory.

In an implementation, the prediction result is the output of the neural network model. That is, the output of the neural network model is used as the prediction result for output.

In another implementation, if the prediction result is a risk level corresponding to a probability value, step 603 includes: outputting, based on a probability interval to which the probability value belongs and a correspondence between the probability interval and the risk level, the risk level corresponding to the probability interval to which the probability value belongs.

For example, risk levels are still classified into three risk levels: high, medium, and low. A probability interval 1 corresponds to the low risk level, a probability interval 2 corresponds to the medium risk level, and a probability interval 3 corresponds to the high risk level.

A manner of classifying probability intervals is not limited in this embodiment of this application, and may be adjusted based on an actual requirement. For example, the probability interval 1 may be $[0,c_1)$, the probability interval 2 may be $[c_1,c_2)$, and the probability interval 3 may be $[c_2,1]$. For example, $c_1$ is equal to 0.4, and $c_2$ is equal to 0.8.

In this embodiment of this application, a manner of outputting the prediction result includes one or more of the following manners: outputting the prediction result by using a display device; outputting the prediction result by using a voice device; or recording the prediction result in an alarm log. In this way, a staff member may learn a prediction result of a memory fault in time. When the probability of UCE occurrence in the memory is high, a related protection measure may be taken in time. For example, data migration or redundancy processing (for example, copying data in the memory to a redundant memory) is performed on the memory, and the memory is replaced, so as to reduce a loss caused by breakdown.

Optionally, the method may further include: automatically executing some protection measures, for example, memory chip isolation, based on the prediction result and according to a specified memory protection policy.

The following describes, with reference to specific examples, the memory fault prediction method provided in this embodiment of this application.

Example 1

It is known that the reference location distribution is 0x2670, four CEs occur in the memory, and error location distributions corresponding to all CEs are 0x0010, 0x0030, 0x0020, and Ox0010 respectively. After calculation, Hamming distances between first binary sequences corresponding to all the CEs and a second binary sequence corresponding to the reference location distribution are 5, 4, 5, and 5 respectively. a1=3 and a2=10. Therefore, risk levels of UCE occurrence in the memory caused by the error location distributions corresponding to the four CEs are medium, medium, medium, and medium respectively.

Example 2

It is known that the reference location distribution is 0x2670, four CEs occur in the memory, and error location distributions corresponding to all CEs are 0x2400, 0x2500, 0x2510, and Ox2610 respectively. After calculation, Hamming distances between first binary sequences corresponding to all the CEs and a second binary sequence corresponding to the reference location distribution are 4, 5, 4, and 2 respectively. a1=3 and a2=10. Therefore, risk levels of UCE occurrence in the memory caused by the error location distributions corresponding to the four CEs are medium, medium, medium, and high respectively.

Example 3

It is known that the reference location distribution is 0x2670, four CEs occur in the memory, and error location distributions corresponding to all CEs are 0x700F, 0x500F, 0x700E and 0x500D respectively. After calculation, Hamming distances between first binary sequences corresponding to the four CEs and a second binary sequence corresponding to the reference location distribution are 11, 12, 10, and 11 respectively. a1=3, and a2=10. Therefore, risk levels of UCE occurrence in the memory caused by the error location distributions corresponding to the four CEs are low, low, low, and low respectively.

Example 4

It is known that the reference location distribution is 0x2670, four CEs occur in the memory, and error location distributions corresponding to all CEs are 0x2401, 0x2410, 0x2630, and 0x2500 respectively. After image processing and after calculation, overlapping degrees between first graphs corresponding to the four CEs and a second graph corresponding to the reference location distribution are 69%, 81%, 94%, and 69% respectively. b1=40% and b2=80%. Therefore, risk levels of UCE occurrence in the memory caused by the error location distributions corresponding to the four CEs are medium, high, high, and medium respectively.

Example 5

For a case in which there is no reference location distribution that is known, a data set has, in total, 4255 pieces of information about pieces of information about error location distributions for which a CE occurs in a memory having only CE occurrence, and 4255 pieces of information about error location distributions for which a CE occurs in a memory having UCE occurrence. The memory fault model is obtained through CNN model training, and error location distributions 0x700F, 0x0030, 0x2630, and Ox2500 respectively corresponding to CEs are input for testing, to obtain probabilities that the UCE occurs in the memory, that is, 0.12, 0.35, 0.92, and 0.73 respectively. c1=0.4 and c2=0.8. Therefore, risk levels of UCE occurrence in the memory caused by the error location distributions corresponding to the CEs are low, low, high, and medium respectively.

FIG. 7 is a diagram of a structure of a memory fault prediction apparatus according to this application. The prediction apparatus may be implemented as a part or all of a computer device by using software, hardware, or a combination thereof. As shown in FIG. 7, the apparatus 700 includes a first obtaining unit 701, a second obtaining unit 702, and a prediction unit 703. The first obtaining unit 701 is configured to obtain an error location distribution of an error correction unit associated with a memory, where the memory includes at least one memory device, each memory device includes a plurality of memory cells arranged in an array, the error correction unit includes a plurality of data bits obtained from the plurality of memory cells of the at least one memory device through a plurality of consecutive times of burst read, each of the plurality of data bits corresponds to one memory cell in the memory, the error location distribution indicates a location of an error data bit in the plurality of data bits, and the error location distribution causes correctable error CE occurrence in the memory. The second obtaining unit 702 is configured to obtain a memory fault model, where the memory fault model includes at least one reference location distribution, and the reference location distribution is associated with an uncorrectable error UCE of the memory. The prediction unit 703 is configured to output a prediction result based on a similarity between the error location distribution and the at least one reference location distribution, where the prediction result indicates a probability of UCE occurrence in the memory.

In a possible implementation, the prediction unit 703 includes a calculation subunit 7031 and an output subunit 7032. In some examples, the calculation subunit 7031 is configured to separately calculate a similarity between the error location distribution and each reference location distribution; and the output subunit 7032 is configured to output the prediction result based on the calculated similarity. In some other examples, the calculation subunit 7031 is configured to sequentially calculate a similarity between the error location distribution and each reference location distribution; and the output subunit 7032 is configured to: when the calculated similarity is higher than a similarity threshold, output the prediction result based on the similarity higher than the similarity threshold.

Optionally, the error location distribution is represented by a plurality of first elements, the plurality of first elements are in one-to-one correspondence with the plurality of data bits, and each first element indicates whether one corresponding data bit is an error data bit; and the reference location distribution is represented by a plurality of second elements, each second element indicates whether an error occurs in one data bit, and the plurality of first elements are in one-to-one correspondence with the plurality of second elements. Calculating a similarity between the error location distribution and any reference location distribution in the memory fault model includes: collecting statistics on a quantity of first elements that are in the error location distribution and that are different from the corresponding second elements, to obtain the similarity; or collecting statistics on a quantity of first elements that are in the error location distribution and that are the same as the corresponding second elements, to obtain the similarity.

In some examples, the error location distribution is represented by a first binary sequence, the first binary sequence includes a plurality of first data bits, and one first data bit is one first element. The reference location distribution is represented by a second binary sequence, the second binary sequence includes a plurality of second data bits, and one second data bit is one second element. The calculation subunit 7031 is configured to calculate a Hamming distance between the first binary sequence and the second binary sequence.

Optionally, the output subunit 7032 is configured to determine, based on a distance interval to which the Hamming distance belongs and a correspondence between the distance interval and a risk level, a risk level to which a probability of UCE occurrence in the memory belongs, where the correspondence includes N distance intervals and N risk levels, different distance intervals correspond to different risk levels, and N is an integer and N is greater than 1.

In some other examples, the error location distribution is represented by a first graph, the first graph includes a plurality of first units arranged in an array, the plurality of first units are in one-to-one correspondence with the plurality of data bits, and each first unit indicates whether one corresponding data bit is an error data bit. The reference location distribution is represented by a second graph, the second graph includes a plurality of second units arranged in an array, and the plurality of second units are in one-to-one correspondence with the plurality of first units. The calculation subunit 7031 is configured to use an overlapping degree between the first graph and the second graph as the similarity, where the overlapping degree is in direct proportion to a quantity of first faulty units that are in the first graph and that have same locations as second faulty units in the second graph, the first faulty unit is a first unit indicating that a corresponding data bit is an error data bit, and the second faulty unit is a second unit indicating that a corresponding data bit is an error data bit.

Optionally, the calculation subunit 7031 is configured to: determine the overlapping degree based on the quantity of first faulty units that are in the first graph and that have the same locations as the second faulty units in the second graph and a quantity of second faulty units in the second graph; determine the overlapping degree based on the quantity of first faulty units that are in the first graph and that have the same locations as the second faulty units in the second graph, relative locations of a first non-faulty unit that is in the first graph and that has a same location as the second faulty unit in the second graph and the first faulty unit in the second graph, and a quantity of second faulty units in the second graph; determine the overlapping degree based on a quantity of overlapping units in the first graph and the second graph and a quantity of first units in the first graph, where the overlapping units include the first faulty unit that is in the first graph and that has the same location as the second faulty unit in the second graph, and a first non-faulty unit that is in the first graph and that has a same location as a second non-faulty unit; or determine the overlapping degree based on a quantity of overlapping units in the first graph and the second graph, relative locations of a first non-faulty unit that is in the first graph and that has a same location as the second faulty unit in the second graph and the first faulty unit in the second graph, and a quantity of first units in the first graph.

Optionally, the output subunit 7032 is configured to determine, based on an overlapping degree interval to which the overlapping degree belongs and a correspondence between the overlapping degree interval and a risk level, a risk level to which the probability of UCE occurrence in the memory belongs, where the correspondence includes M overlapping degree intervals and M risk levels, different overlapping degree intervals correspond to different risk levels, and M is an integer and M is greater than 1.

In another possible implementation, the memory fault model is a neural network model, the neural network model is obtained through training by using a first-type sample and a second-type sample, the first-type sample is an error location distribution of a corresponding error correction unit when the CE occurs in the memory having only CE occurrence, and the second-type sample is an error location distribution of a corresponding error correction unit when a CE occurs in the memory having UCE occurrence before a UCE occurs. The prediction unit 703 is configured to process the error location distribution of the error correction unit by using the neural network model, to obtain the prediction result.

It should be noted that, when the memory fault prediction apparatus provided in the foregoing embodiment predicts a memory fault, division of the foregoing functional modules is merely used as an example for description. During actual application, the foregoing functions may be allocated to different functional modules for implementation as required. That is, an internal structure of the apparatus is divided into different functional modules to implement all or some of the functions described above. In addition, the memory fault prediction apparatus provided in the foregoing embodiment and the embodiment of the memory fault prediction method belong to a same concept. For a specific implementation process of the memory fault prediction apparatus provided in the foregoing embodiment, refer to the method embodiment. Details are not described herein again.

Division into the modules in this embodiment of this application is an example, and is merely logical function division. During actual implementation, another division manner may be used. In addition, the functional modules in embodiments of this application may be integrated in one processor, or may exist as physically independent. Alternatively, two or more modules may be integrated into one module. The integrated module may be implemented in a form of hardware, or may be implemented in a form of a software functional module.

If the integrated module is implemented in a form of hardware, the integrated module may be implemented by using a chip, may be implemented by using a CPU, may be implemented by using an ASIC, or may be implemented by using a PLD.

If the integrated module is implemented in a form of a software functional module and is sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions to enable a terminal device (which may be a personal computer, a mobile phone, a communication device, or the like) or the processor (processor) to perform all or some of the steps of the method described in embodiments of this application. The foregoing storage medium includes any medium that can store program code, such as a USB flash drive, a removable hard disk, a ROM, a RAM, a magnetic disk, or an optical disc.

The descriptions of procedures corresponding to the foregoing accompanying drawings have respective focuses. For a part of a procedure that is not described in detail, refer to related descriptions of another procedure.

An embodiment of this application further provides a computer-readable storage medium. The computer-readable storage medium stores computer instructions, and when the computer instructions stored in the computer-readable storage medium are executed by a computer device, the computer device is caused to perform the memory fault prediction method provided above.

An embodiment of this application further provides a computer program product including instructions. When the computer program product runs on a computer device, the computer device is caused to perform the memory fault prediction method provided above.

An embodiment of this application further provides a chip. The chip includes a processor and a power supply circuit. The power supply circuit is configured to supply power to the processor. The processor is configured to perform the memory fault prediction method shown in FIG. 2, FIG. 4, or FIG. 6.

In some examples, the chip further includes a storage, the storage stores computer instructions, and the processor is configured to execute the computer instructions stored in the storage, to implement the memory fault prediction method shown in FIG. 2, FIG. 4, or FIG. 6.

Unless otherwise defined, technical terms or scientific terms used herein should have a general meaning understood by a person of ordinary skill in the art of this application. In the specification and claims of this application, terms such as "first", "second", and "third" do not indicate any order, quantity, or importance, but are merely used to distinguish different components. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded. "A plurality of" in embodiments of this application refers to two or more. A and/or B indicates that three cases exist: A, B, and A and B.

The foregoing descriptions are merely an embodiment of this application, but are not intended to limit this application. Any modification, equivalent replacement, improvement, or the like made within the spirit and principle of this application shall fall within the protection scope of this application.

**Claims**

1. A memory fault prediction method, comprising:

    obtaining an error location distribution of an error correction unit associated with a memory, wherein the memory comprises at least one memory device, each memory device comprises a plurality of memory cells arranged in an array, the error correction unit comprises a plurality of data bits obtained from the plurality of memory cells of the at least one memory device through a plurality of consecutive times of burst read, each of the plurality of data bits corresponds to one memory cell in the plurality of memory cells of the at least one memory device, the error location distribution indicates a location of an error data bit in the plurality of data bits, and the error location distribution causes correctable error CE occurrence in the memory;

obtaining a memory fault model, wherein the memory fault model comprises at least one reference location distribution, and the reference location distribution is associated with an uncorrectable error UCE of the memory; and

outputting a prediction result based on a similarity between the error location distribution and the at least one reference location distribution, wherein the prediction result indicates a probability of UCE occurrence in the memory.

2. The method according to claim 1, wherein the outputting the prediction result based on the similarity between the error location distribution and the at least one reference location distribution comprises:

   separately calculating a similarity between the error location distribution and each reference location distribution; and
   outputting the prediction result based on the calculated similarity; or
   the outputting the prediction result based on the similarity between the error location distribution and the at least one reference location distribution comprises:

      sequentially calculating a similarity between the error location distribution and each reference location distribution; and
      when the calculated similarity is higher than a similarity threshold, outputting the prediction result based on the similarity higher than the similarity threshold.

3. The method according to claim 2, wherein the error location distribution is represented by a plurality of first elements, the plurality of first elements are in one-to-one correspondence with the plurality of data bits, and each first element indicates whether one corresponding data bit is an error data bit;

   the reference location distribution is represented by a plurality of second elements, and the plurality of first elements are in one-to-one correspondence with the plurality of second elements; and
   calculating a similarity between the error location distribution and any reference location distribution in the memory fault model comprises:

   collecting statistics on a quantity of first elements that are in the error location distribution and that are different from the corresponding second elements, to obtain the similarity; or
   collecting statistics on a quantity of first elements that are in the error location distribution and that are the same as the corresponding second elements, to obtain the similarity.

4. The method according to claim 3, wherein the error location distribution is represented by a first binary sequence, the first binary sequence comprises a plurality of first data bits, and one first data bit is one first element;

   the reference location distribution is represented by a second binary sequence, the second binary sequence comprises a plurality of second data bits, and one second data bit is one second element; and
   the collecting statistics on the quantity of first elements that are in the error location distribution and that are different from the corresponding second elements, to obtain the similarity comprises:
   calculating a Hamming distance between the first binary sequence and the second binary sequence.

5. The method according to claim 2, wherein the error location distribution is represented by a first graph, the first graph comprises a plurality of first units arranged in an array, the plurality of first units are in one-to-one correspondence with the plurality of data bits, and each first unit indicates whether one corresponding data bit is an error data bit;

   the reference location distribution is represented by a second graph, the second graph comprises a plurality of second units arranged in an array, and the plurality of second units are in one-to-one correspondence with the plurality of first units; and
   calculating a similarity between the error location distribution and any reference location distribution in the memory fault model comprises:
   using an overlapping degree between the first graph and the second graph as the similarity, wherein the overlapping degree is in direct proportion to a quantity of first faulty units that are in the first graph and that have same locations as second faulty units in the second graph, the first faulty unit is a first unit indicating that a corresponding data bit is an error data bit, and the second faulty unit is a second unit indicating that a corresponding data bit is an error data bit.

6. The method according to claim 5, wherein the using the overlapping degree between the first graph and the second graph as the similarity comprises:

determining the overlapping degree based on the quantity of first faulty units that are in the first graph and that have the same locations as the second faulty units in the second graph and a quantity of second faulty units in the second graph;
or
determining the overlapping degree based on the quantity of first faulty units that are in the first graph and that have the same locations as the second faulty units in the second graph, relative locations of a first non-faulty unit that is in the first graph and that has a same location as the second faulty unit in the second graph and the first faulty unit in the second graph, and a quantity of second faulty units in the second graph;
or
determining the overlapping degree based on a quantity of overlapping units in the first graph and the second graph and a quantity of first units in the first graph, wherein the overlapping units comprise the first faulty unit that is in the first graph and that has the same location as the second faulty unit in the second graph, and a first non-faulty unit that is in the first graph and that has a same location as a second non-faulty unit in the second graph;
or
determining the overlapping degree based on a quantity of overlapping units in the first graph and the second graph, relative locations of a first non-faulty unit that is in the first graph and that has a same location as the second faulty unit in the second graph and the first faulty unit in the second graph, and a quantity of first units in the first graph.

7. The method according to claim 1, wherein the memory fault model is a neural network model, the neural network model is obtained through training by using a first-type sample and a second-type sample, the first-type sample is an error location distribution of a corresponding error correction unit when a CE occurs in the memory having only CE occurrence, and the second-type sample is an error location distribution of a corresponding error correction unit when a CE occurs in the memory having UCE occurrence before a UCE occurs; and
the outputting the prediction result based on the similarity between the error location distribution and the at least one reference location distribution comprises:
processing the error location distribution by using the neural network model, to obtain the prediction result.

8. A memory fault prediction apparatus, comprising:

a first obtaining unit, configured to obtain an error location distribution of an error correction unit associated with a memory, wherein the memory comprises at least one memory device, each memory device comprises a plurality of memory cells arranged in an array, the error correction unit comprises a plurality of data bits obtained from the plurality of memory cells of the at least one memory device through a plurality of consecutive times of burst read, each of the plurality of data bits corresponds to one memory cell in the plurality of memory cells of the at least one memory device, the error location distribution indicates a location of an error data bit in the plurality of data bits, and the error location distribution causes correctable error CE occurrence in the memory;
a second obtaining unit, configured to obtain a memory fault model, wherein the memory fault model comprises at least one reference location distribution, and the reference location distribution is associated with an uncorrectable error UCE of the memory; and
a prediction unit, configured to output a prediction result based on a similarity between the error location distribution and the at least one reference location distribution, wherein the prediction result indicates a probability of uncorrectable error UCE occurrence in the memory.

9. A chip, wherein the chip comprises a logic circuit and a power supply circuit, the logic circuit is configured to perform the method according to any one of claims 1 to 7, and the power supply circuit is configured to supply power to the logic circuit.

10. An electronic device, wherein the electronic device comprises a processor and a storage, the storage is configured to store a software program, and the processor runs or executes the software program stored in the storage, to cause the electronic device to implement the method according to any one of claims 1 to 7.

11. A computer-readable storage medium, wherein the computer-readable storage medium is configured to store program code executed by a processor, and the program code comprises instructions used for implementing the method according to any one of claims 1 to 7.

**10**

BMC — 140

BIOS chip — 130

Processor — 110

Memory controller — 1101

Memory — 120

Bus — 150

FIG. 1

| Obtain an error location distribution of an error correction unit associated with a memory | 201 |

| Obtain a memory fault model, where the memory fault model includes at least one reference location distribution, and the at least one reference location distribution is associated with a UCE of the memory | 202 |

| Output a prediction result based on a similarity between the error location distribution and the at least one reference location distribution, where the prediction result indicates a probability of UCE occurrence in the memory | 203 |

FIG. 2

EP 4 779 476 A1

| | Device 0 | Device 1 | Device 2 | ... | Device 15 | Parity check | CRC |
|---|---|---|---|---|---|---|---|
| | DQ DQ DQ DQ<br>0  1  2  3 | DQ DQ DQ DQ<br>4  5  6  7 | DQ DQ DQ DQ<br>8  9  10  11 | | DQ DQ DQ DQ<br>60  61  62  63 | P0 P1 P2 P3 | C0 C1 C2 C3 |

CLOCK

| | Device 0 | Device 1 | Device 2 | Device 15 | Parity check | CRC |
|---|---|---|---|---|---|---|
| Burst 0 data | D0 D1 D2 D3 | D4 D5 D6 D7 | D8 D9 D10 D11 | D60 D61 D62 D63 | P0 P1 P2 P3 | C0 C1 C2 C3 |
| Burst 1 data | D0 D1 D2 D3 | D4 D5 D6 D7 | D8 D9 D10 D11 | D60 D61 D62 D63 | P0 P1 P2 P3 | C0 C1 C2 C3 |
| Burst 2 data | D0 D1 D2 D3 | D4 D5 D6 D7 | D8 D9 D10 D11 | D60 D61 D62 D63 | P0 P1 P2 P3 | C0 C1 C2 C3 |
| Burst 3 data | D0 D1 D2 D3 | D4 D5 D6 D7 | D8 D9 D10 D11 | D60 D61 D62 D63 | P0 P1 P2 P3 | C0 C1 C2 C3 |
| Burst 4 data | D0 D1 D2 D3 | D4 D5 D6 D7 | D8 D9 D10 D11 | D60 D61 D62 D63 | P0 P1 P2 P3 | C0 C1 C2 C3 |
| Burst 5 data | D0 D1 D2 D3 | D4 D5 D6 D7 | D8 D9 D10 D11 | D60 D61 D62 D63 | P0 P1 P2 P3 | C0 C1 C2 C3 |
| Burst 6 data | D0 D1 D2 D3 | D4 D5 D6 D7 | D8 D9 D10 D11 | D60 D61 D62 D63 | P0 P1 P2 P3 | C0 C1 C2 C3 |
| Burst 7 data | D0 D1 D2 D3 | D4 D5 D6 D7 | D8 D9 D10 D11 | D60 D61 D62 D63 | P0 P1 P2 P3 | C0 C1 C2 C3 |

FIG. 3

| Obtain an error location distribution of an error correction unit associated with a memory | 401 |

| Obtain a memory fault model, where the memory fault model includes at least one reference location distribution | 402 |

| Separately calculate a similarity between the error location distribution and each reference location distribution | 403 |

| Output a prediction result based on all calculated similarities | 404 |

FIG. 4

First graph

Second graph

FIG. 5

| Obtain an error location distribution of an error correction unit associated with a memory | ⟋ 601 |

↓

| Obtain a neural network model | ⟋ 602 |

↓

| Process the error location distribution by using the neural network model, to obtain a prediction result | ⟋ 603 |

FIG. 6

<u>700</u>

701

| First obtaining unit |

702

| Second obtaining unit |

703

| | 7031 |
| Calculation subunit | |
| | 7032 |
| Output subunit | |

FIG. 7

## INTERNATIONAL SEARCH REPORT

| International application No. |
| --- |
| **PCT/CN2024/107351** |

**A.    CLASSIFICATION OF SUBJECT MATTER**

G06F 11/07(2006.01)i

According to International Patent Classification (IPC) or to both national classification and IPC

**B.    FIELDS SEARCHED**

Minimum documentation searched (classification system followed by classification symbols)

IPC：G06F

Documentation searched other than minimum documentation to the extent that such documents are included in the fields searched

Electronic data base consulted during the international search (name of data base and, where practicable, search terms used)

CNABS; CNTXT; CNKI; WPABS; DWPI; ENTXT; USTXT; WOTXT; EPTXT: 内存, 存储, 故障, 出错, 错误, 预测, 检测, 位置, 数据位, 参考, 分布, 相似度, 距离, 可纠正, 概率, memory, storage, error, fault, predict, detect, position, data bit, reference, distribution, similarity, distance, correctable error, CE

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115952024 A (SUZHOU INSPUR INTELLIGENT TECHNOLOGY CO., LTD.) 11 April 2023 (2023-04-11) description, paragraphs [0076]-[0116], and figures 1-3 | 1-11 |
| A | CN 114996065 A (ALIBABA (CHINA) CO., LTD.) 02 September 2022 (2022-09-02) entire document | 1-11 |
| A | CN 115640174 A (CHAOJUBIAN DIGITAL TECHNOLOGY CO., LTD.) 24 January 2023 (2023-01-24) entire document | 1-11 |
| A | US 7404118 B1 (SUN MICROSYSTEMS, INC.) 22 July 2008 (2008-07-22) entire document | 1-11 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 September 2024** | **30 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/107351**

| Patent document cited in search report | | | Publication date (day/month/year) | Patent family member(s) | Publication date (day/month/year) |
|---|---|---|---|---|---|
| CN | 115952024 | A | 11 April 2023 | None | |
| CN | 114996065 | A | 02 September 2022 | None | |
| CN | 115640174 | A | 24 January 2023 | None | |
| US | 7404118 | B1 | 22 July 2008 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311286869